# EUROPEAN PATENT APPLICATION

(11) **EP 4 776 493 A1**
(43) Date of publication of application: **15.07.2026**
(21) Application number: 25222097.5
(22) Date of filing: 10.12.2025
(51) Int. Cl.: H02M 1/00, H02M 3/158, H02M 7/08, H02M 7/483, H02M 7/5387, H02M 7/5395

(54) **POWER CONVERSION APPARATUS AND CONTROL METHOD THEREOF**

(30) Priority: 30.12.2024 KR 20240199785
(71) Applicant: Hanwha Solutions Corporation, Jung-gu Seoul 04541 (KR)
(72) Inventor: KANG, Eun Seok, Seoul 04541 (KR); JO, Seung Won, Seoul 04541 (KR); KIM, Do Yun, Seoul 04541 (KR); PARK, Hyun Su, Seoul 04541 (KR)
(74) Representative: Mooser, Sebastian Thomas

(57) **Abstract**

Provided is a power conversion apparatus including an input circuit generating an input voltage, a buck-boost converter connected to the input circuit, a first full-bridge inverter and a second full-bridge inverter, which are connected to the buck-boost converter, at least one first inductor connected to the first full-bridge inverter, at least one second inductor connected to the second full-bridge inverter, an output circuit connected to the at least one first inductor and the at least one second inductor to generate an alternating current output voltage, and at least one processor configured to apply a first carrier signal and a reference signal to the first full-bridge inverter and applying a second carrier signal and the reference signal to the second full-bridge inverter, wherein the first full-bridge inverter operates based on the first carrier signal and the reference signal, and the second full-bridge inverter operates based on the second carrier signal and the reference signal.

## Description

### BACKGROUND

### 1. Field

The disclosure relates to a power conversion apparatus and a control method thereof, and more particularly, to a power conversion apparatus including a bipolar inverter having an interleaved structure, and a control method of the power conversion apparatus.

### 2. Description of the Related Art

As the use of renewable energy sources, such as photovoltaic generation, expands, there is a growing need to improve the performance of grid-connected inverters built into energy storage systems (ESS) that support the use of renewable energy sources. In particular, to supply alternating current (AC) 120 V voltage used in places such as the United States and Japan, a method of connecting an autotransformer to a single-phase three-wire configuration is widely adopted. However, when using an autotransformer, there are disadvantages such as increased volume and increased cost, and therefore, a technological alternative is required to compensate for the above disadvantages.

To solve these problems, a split phase technique has been proposed, which has attracted attention as a method capable of enabling efficient voltage supply while replacing the autotransformer. A bipolar method, which is one of the common configurations of inverter topology using the split phase technique, has the advantages of simple control and low leakage current. However, when only the bipolar method is used, there are disadvantages in that an inductor volume increases due to high total harmonic distortion (THD) and switching frequency current ripple occurring in a grid-side inductor.

Accordingly, to maximize the performance of an ESS utilizing renewable energy, a new technological approach is needed that may overcome the limitations of the existing autotransformer-based configuration and a bipolar inverter in terms of performance and economic efficiency.

The background technology described above is technical information that the inventor possessed for deriving the disclosure or acquired in the process of deriving the disclosure, and cannot necessarily be considered as publicly known technology disclosed to the general public prior to the application for the disclosure.

### SUMMARY

The disclosure provides a power conversion apparatus and a method thereof. Objectives to be solved by the disclosure are not limited to the objectives mentioned above, and other objectives and advantages of the disclosure that are not mentioned may be understood through the following description, and will be more clearly understood through the embodiments of the disclosure. In addition, it will be appreciated that the objectives and advantages to be solved by the disclosure may be realized by the means and combinations thereof indicated in the patent claims.

As a technical means for achieving the above-described technical objectives, a first aspect of the disclosure may provide a power conversion apparatus including an input circuit generating an input voltage, a buck-boost converter connected to the input circuit, a first full-bridge inverter and a second full-bridge inverter, which are connected to the buck-boost converter, at least one first inductor connected to the first full-bridge inverter, at least one second inductor connected to the second full-bridge inverter, an output circuit connected to the at least one first inductor and the at least one second inductor to generate an alternating current output voltage, and at least one processor configured to apply a first carrier signal and a reference signal to the first full-bridge inverter and apply a second carrier signal and the reference signal to the second full-bridge inverter, wherein the first full-bridge inverter operates based on the first carrier signal and the reference signal, and the second full-bridge inverter operates based on the second carrier signal and the reference signal.

A second aspect of the disclosure may provide a power conversion method including applying a first carrier signal and a reference signal to a first full-bridge inverter, applying a second carrier signal and the reference signal to a second full-bridge inverter, and obtaining an alternating current output voltage corresponding to an input voltage as the first full-bridge inverter and the second full-bridge inverter operate, wherein first full-bridge inverter and the second full-bridge inverter are connected to a buck-boost converter, the buck-boost converter is connected to an input circuit that generates the input voltage, and an output circuit generating the alternating current output voltage is connected to at least one first inductor and at least one second inductor.

A third aspect of the disclosure may provide a computer-readable recording medium having recorded thereon a program to cause a computer to execute the method of the second aspect.

Other aspects, features, and advantages other than those described above will become apparent from the following drawings, claims, and detailed description of the disclosure.

### BRIEF DESCRIPTION OF THE DRAWINGS

These and/or other aspects will become apparent and more readily appreciated from the following description of the embodiments, taken in conjunction with the accompanying drawings in which:
FIG. 1 is an example diagram for schematically describing a power supply system;
FIG. 2 is an example of a power supply system according to an embodiment;
FIG. 3 is an example of a power supply system according to another embodiment;
FIG. 4 is a block diagram of a device according to an embodiment;
FIG. 5 is an example of a circuit diagram of a first full-bridge inverter configuring a power conversion apparatus according to an embodiment;
FIG. 6 is an example circuit diagram of an interleaved bipolar inverter configuring a power conversion apparatus according to an embodiment;
FIG. 7 is an example circuit diagram of an interleaved bipolar inverter applying a buck-boost technique according to an embodiment;
FIG. 8 is an example of a method by which each switch included in a power conversion apparatus according to an embodiment operates;
FIG. 9 is an example of a grid current waveform of a power conversion apparatus according to an embodiment; and
FIG. 10 is a flowchart of a method by which a power conversion apparatus according to an embodiment operates.

### DETAILED DESCRIPTION

Advantages and features of the disclosure and methods of achieving the same will be apparent with reference to embodiments and drawings described below in detail. The disclosure may, however, be embodied in many different forms and should not be construed as being limited to the embodiments set forth herein. The disclosure should be understood to include all transformations, equivalents, or substitutes included in the spirit and technical scope of the disclosure. The embodiments to be disclosed below are provided so that the disclosure will be complete and will fully convey the scope of the disclosure to those skilled in the art to which the disclosure pertains. In the description of the disclosure, if it is determined that a detailed description of a related known technology may obscure the gist of the disclosure, the detailed description is omitted.

The terms used in the application are used only to describe particular embodiments and are not intended to limit the disclosure. Singular expressions include plural expressions, unless the context clearly indicates otherwise. In the application, it should be understood that terms such as "include" or "have" are intended to specify the presence of a feature, number, step, operation, component, part, or combinations thereof described in the specification, but do not exclude in advance the possibility of the presence or addition of one or more other features, numbers, steps, operations, components, parts, or combinations thereof.

Some embodiments of the disclosure may be represented by functional block configurations and various processing steps. Some or all of these functional blocks may be implemented with various numbers of hardware and/or software configurations that perform specific functions. For example, the functional blocks of the disclosure may be implemented by one or more microprocessors or by circuit configurations for a certain function. In addition, for example, the functional blocks of the disclosure may be implemented in various programming or scripting languages. Functional blocks may be implemented as algorithms that are executed by one or more processors. Also, the disclosure may employ conventional techniques for electronic environment setting, signal processing, and/or data processing. Terms such as "mechanism," "element," "means," and "composition" may be used broadly and are not limited to mechanical and physical configurations.

In addition, connecting lines or connecting members between components depicted in the drawings are only illustrative of functional connections and/or physical or circuit connections. In an actual device, connections between components may be represented by a variety of alternative or additional functional, physical, or circuit connections.

Hereinafter, the disclosure will be described in detail with reference to the attached drawings.

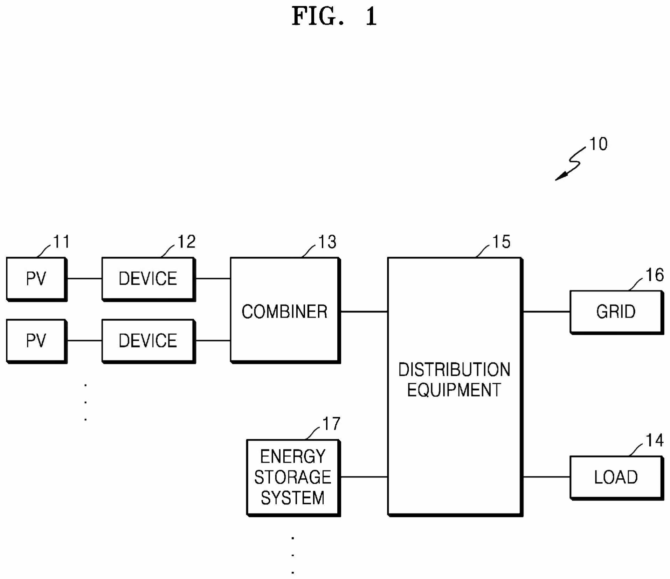

FIG. 1 is an example diagram for schematically describing a power supply system.

Referring to FIG. 1, a power supply system 10 may include a photovoltaic module 11, a device 12, a load 14, and/or distribution equipment 15. The power supply system 10 may be connected to an external power grid 16.

At least one photovoltaic module 11 may be installed on the roof or exterior wall of a building to generate power. A plurality of photovoltaic modules 11 may be connected to form a photovoltaic module array.

The photovoltaic module 11 may be connected to the device 12. For example, at least one device 12 may be connected to each photovoltaic module 11. As an example, in case that one device 12 is connected to each photovoltaic module 11, the number of devices 12 configuring the power supply system 10 may be equal to the number of photovoltaic modules 11.

The device 12 may be a power conditioning system (PCS) or power conversion system that performs power conversion for power generated from the photovoltaic module 11. For example, the device 12 may perform a certain conversion on the power generated from the photovoltaic module 11 and supply the converted power to other components of the power supply system 10 (e.g., the power grid 16 and/or the load 14, etc.).

In some embodiments, the device 12 may be module-level power electronics (MLPE). For example, the device 12 may be an optimizer or a micro-inverter (MI).

As an example, in case that the device 12 is an optimizer, the device 12 may regulate the power produced from the photovoltaic module 11 and output the regulated power to an inverter (e.g., a string inverter). Current converted by an inverter (e.g., direct current converted into alternating current) may be output to the power grid 16 or the load 14.

As another example, in case that the device 12 is an MI, the device 12 may convert power generated from the photovoltaic module 11 (e.g., conversion of direct current into alternating current). The current converted by the device 12 may be output to the power grid 16 or the load 14.

When necessary, the power supply system 10 may further include a combiner 13. At least some of the devices 12 may be connected to the distribution equipment 15 via the combiner 13. For example, power output from a plurality of devices 12 may be combined into one output in the combiner 13 and supplied to the distribution equipment 15.

For example, the device 12 and the distribution equipment 15 may also be connected by a power path that does not include the combiner 13, and at least one device 12 may be connected to the distribution equipment 15 by a power path that does not include the combiner 13, and at least one other device 12 may be connected to the distribution equipment 15 via the combiner 13.

The combiner 13 may perform control on the voltage, current, and/or power output from the device 12 according to the power supply status of the photovoltaic module 11, the device 12, and/or the power grid 16, and may set an operating mode of the combiner 13 to a diagnosis mode or an operation mode, etc.

In some embodiments, the combiner 13 may include an energy management system (EMS) that controls an operation of the combiner 13. The EMS may perform control on the voltage, current, and/or power supplied to the combiner 13 or output from the combiner 13 according to the power supply status of the photovoltaic module 11, the device 12 and/or the power grid 16, and may set the operating mode of the combiner 13 to a diagnosis mode or an operation mode, etc.

The load 14 refers to an object that is installed in an electric power consumer, such as a house, commercial facility, or factory, and operates by receiving at least one of energy generated by the photovoltaic module 11, energy stored in an energy storage device 17, and/or energy supplied from the power grid 16. For example, in case that the electric power consumer receiving power is a house, the load 14 may include home appliances, such as a washing machine, a refrigerator, or a television (TV).

The power grid 16 may include an infrastructure system for generating, transmitting, and distributing power. For example, the power grid 16 may include infrastructure systems, such as power plants, substations, and power lines. For example, the power grid 16 may transmit electric energy generated by the power plant to the power supply system 10 or transmit surplus power generated by the power supply system 10 to the outside of the power supply system 10.

For example, commercial power transmitted from the power grid 16 through a power pole may be supplied to an electric power consumer through a transformer. For example, the power supply system 10 may also be implemented as an off-grid system that is not connected to the power grid 16.

For example, the power supply system 10 may further include at least one energy storage device 17. When necessary, the power supply system 10 may include a plurality of energy storage devices 17. The energy storage device 17 may receive and store power generated by the photovoltaic module 11 and/or power transmitted from the power grid 16. The energy storage device 17 may efficiently supply power by storing the power and supplying the power to the load 14 when the load 14 needs power.

The energy storage device 17 may include a battery that stores power and a power conversion module. The battery may be provided with a battery management system (BMS) that monitors the state-of-charge (SOC), state-of-health (SOH), voltage and/or current of the battery, performs diagnostics on the battery, and performs safety functions such as current cutoff.

In some embodiments, the power conversion module may be a PCS that performs conversion between battery-side power and the opposite-side power. For example, the PCS may perform conversion between battery-side direct current and the opposite-side alternating current. As an example, the PCS may include a bidirectional direct current (DC)-DC converter that is connected to a battery and converts voltage, and a bidirectional inverter that connects the DC-DC converter to the outside of the energy storage device 17.

In some embodiments, the energy storage device 17 may further include an EMS that controls an operation of the energy storage device 17. The EMS may perform control on the voltage, current, and/or power supplied to the energy storage device 17 or output from the energy storage device 17 according to the power supply status of the battery and/or the power grid 16, and may set the operating mode of the energy storage device 17 to a diagnosis mode or an operation mode, etc.

When necessary, an EMS coupled to a certain component of the power supply system 10 may not only control an operation of the certain component, but may also further control operations of other components of the power supply system 10. For example, an EMS coupled to the combiner 13 or an EMS coupled to the energy storage device 17 may control both the operation of the combiner 13 and the operation of the energy storage device 17.

For example, the distribution equipment 15 may provide electrical connection between the components of the power supply system 10 and may control the power flow of the power supply system 10. For example, the distribution equipment 15 may electrically connect the photovoltaic module 11 to the load 14. As an example, the distribution equipment 15 may be connected to the device 12 connected to the photovoltaic module 11 to electrically connect the photovoltaic module 11 to the load 14. When necessary, the distribution equipment 15 may be further connected to at least one of the energy storage device 17 and the power grid 16.

For example, the distribution equipment 15 may be a distribution panel that distributes power within the power supply system 10. As an example, the distribution equipment 15 may be a master service panel (MSP) that distributes power generated by the photovoltaic module 11 to the load 14 or the like.

As another example, the distribution equipment 15 may be a main controller that performs power distribution within the power supply system 10 and controls each device 12. As an example, the main controller may include a switch, a circuit breaker, and a controller. The switch, the circuit breaker, and the controller may each be implemented as independent devices, or at least some of the switch, the circuit breaker, and the controller may be included in a single device.

The main controller may include a switch that controls electrical connections between components connected to the main controller, such as the device 12 and the load 14. For example, the main controller may include a relay or power semiconductor that provides or blocks the electrical connection to the device 12 and/or the energy storage device 17 depending on an operating status of each component of the power supply system 10.

The main controller may perform a rapid shutdown to stop the power generation of the photovoltaic module 11 in an emergency situation such as an overcurrent occurrence within the power supply system 10. To this end, the main controller may include a circuit breaker that blocks the connection between the device 12 and the load 14.

The main controller may include a controller that generally controls the operation of the main controller. In addition to the main controller, the controller may control the operations of other components (e.g., the device 12 or the energy storage device 17) of the power supply system 10.

The controller may perform control on the voltage, current, and/or power output from each component or supplied to each component, according to the power supply status of the photovoltaic module 11, the device 12, the combiner 13, the load 14, the power grid 16 and/or the energy storage device 17. In some embodiments, the controller may set the operating mode of the main controller, the device 12, and/or the energy storage device 17 to a diagnostic mode or an operation mode, etc.

For example, the controller may control the photovoltaic module 11, the device 12, the combiner 13, and/or the energy storage device 17, based on the state of the power supply system 10. As an example, the controller may control other components of the power supply system 10 by allowing the main controller to communicate with other components (e.g., the device 12 or the like) of the power supply system 10. Communication between the main controller and other components of the power supply system 10 may be performed by using a power line communication (PLC) method, but is not limited thereto.

As an example, the controller may control the device 12 according to the power generation status of the photovoltaic module 11. For example, the main controller may receive a control command from a server that monitors the power generation status of the photovoltaic module 11, and the controller may control the device 12 according to the control command.

The main controller may supply power to at least some of the loads 14 in case that power supply from the power grid 16 is not smooth (e.g., in an off-grid situation). For example, in case that the power supply from the power grid 16 is not smooth, the main controller may preferentially supply power generated from the photovoltaic module 11 and/or power stored in the energy storage device 17 to a backup load having a relatively high need for a stable power supply.

For example, the power supply system 10 may further include an auxiliary power generation device (e.g., a diesel generator, etc.) that generates power in a separate manner other than photovoltaic generation. For example, the auxiliary power generation device may be further connected to the distribution equipment 15. In case that the backup load cannot be coped with only the photovoltaic module 11 and the energy storage device 17 due to environmental factors such as time zone or weather, the main controller may supply power generated by the auxiliary power generation device to the backup load.

The controller may be implemented by at least one processor. A processor may process commands in a computer program by performing basic arithmetic, logic, and input/output operations. Here, the commands may be provided from an internal memory of the main controller or from an external device. In some embodiments, the processor may control the overall operation of other components included in the main controller.

For example, the processor may perform at least some of the data analysis, processing, and result information generation for performing the above-described operations by using at least one of a machine learning, neural network, or deep learning algorithm as a rule-based or artificial intelligence algorithm. Examples of neural networks may include neural network models based on architectures such as convolutional neural network (CNN), deep neural network (DNN), and recurrent neural network (RNN).

For example, the processor may also be implemented as an array of multiple logic gates, or may be implemented as a combination of a general-purpose microprocessor and a memory storing a program that may be executed on the microprocessor. For example, the processor may include a general-purpose processor, a central processing unit (CPU), a microprocessor, a digital signal processor (DSP), a controller, a microcontroller, a state machine, or the like.

In some environments, the processor may include an application-specific integrated circuit (ASIC), a programmable logic device (PLD), a field-programmable gate array (FPGA), or the like. For example, the processor may refer to a combination of processing devices, such as a combination of a DSP and a microprocessor, a combination of a plurality of microprocessors, a combination of one or more microprocessors coupled to a DSP core, or any combinations of such other configurations.

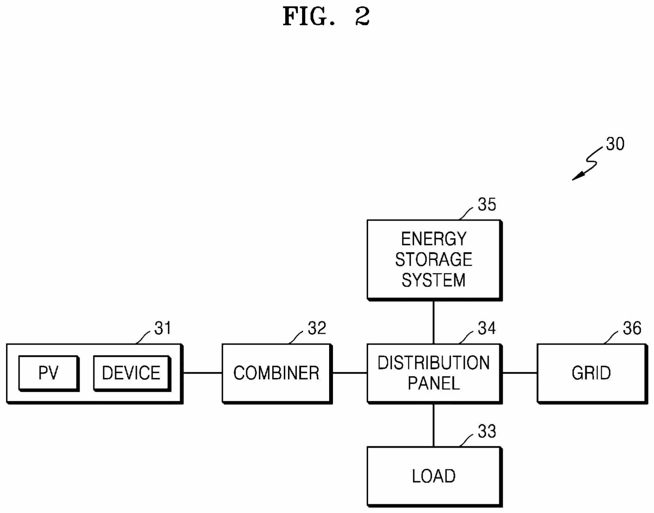

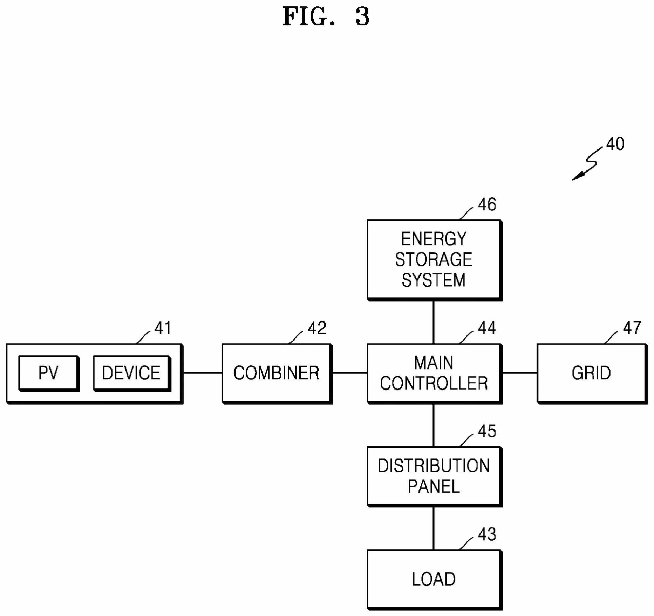

The power supply system 10 may be implemented in various forms by combining at least some of the components described above. Hereinafter, various embodiments of the power supply system 10 are described with reference to FIGS. 2 and 3. However, the implementation method of the power supply system 10 is not limited to the embodiments to be described below.

FIG. 2 is an example of a power supply system according to an embodiment.

Referring to FIG. 2, a power supply system 30 according to an embodiment may include a photovoltaic generation device 31, a combiner 32, a load 33, a distribution panel 34, and an energy storage device 35. In some embodiments, the power supply system 30 may be connected to an external power grid 36.

In an embodiment, the energy storage device 35 may be connected to the distribution panel 34 and may be charged or discharged. In another embodiment, the energy storage device 35 may be connected to the combiner 32 and may be charged or discharged.

In case that the load 33 cannot be coped with only the photovoltaic generation device 31, power stored in the energy storage device 35 may be used to cope with the load 33 by additionally providing the energy storage device 35 in the power supply system 30. In some embodiments, in case that power generated by the photovoltaic generation device 31 exceeds an amount of power required to cope with the load 33, the excess amount may be stored in the energy storage device 35. For example, in case that a charge amount of the energy storage device 35 is at a threshold or less and the power generated by the photovoltaic generation device 31 does not exceed the amount of power required to cope with the load 33, the energy storage device 35 may be charged with power supplied from the power grid 36.

Accordingly, the power supply system 30 may perform efficient power supply to the load 33 by using the energy storage device 35.

For example, the combiner 32 may perform control on the voltage, current, and/or power output from the photovoltaic generation device 31 according to the power supply status of the photovoltaic generation device 31, the load 33, and/or the power grid 36, and may set the operation mode of the combiner 32 to a diagnosis mode or an operation mode, etc.

In some embodiments, the energy storage device 35 may perform control on the voltage, current, and/or power supplied to the energy storage device 35 or output from the energy storage device 35, according to the power supply status of the photovoltaic generation device 31, the load 33, and/or the power grid 36, and may set the operating mode of the energy storage device 35 to a diagnosis mode or an operation mode, etc.

In an embodiment, the power supply system 30 may further include a sub-panel (not shown) connected to the distribution panel 34. At this time, at least one photovoltaic generation device 31 may be connected to the sub-panel through the combiner 32, and at least one other photovoltaic generation device 31 may be directly connected to the sub-panel.

In some embodiments, at least one energy storage device 35 may be integrated into the power supply system 30 by being connected to the combiner 32, the distribution panel 34, or the sub-panel.

For example, at least one photovoltaic generation device 31 and the distribution panel 34 may be connected by a power path that does not include the combiner 32. For example, at least one photovoltaic generation device 31 may be connected to the distribution panel 34 via a power path that does not include the combiner 32, and at least one other photovoltaic generation device 31 may also be connected to the distribution panel 34 via the combiner 32.

In an embodiment, at least one photovoltaic generation device 31 may be connected to the sub-panel via the combiner 32, and at least one other photovoltaic generation device 31 may be connected directly to the sub-panel.

The power supply system 30 may increase the total power generation amount of the photovoltaic generation device 31 that may be integrated into the power supply system 30 by including the sub-panel that provides additional capacity.

FIG. 3 is an example of a power supply system according to another embodiment.

Referring to FIG. 3, a power supply system 40 according to an embodiment may include a photovoltaic generation device 41, a combiner 42, a load 43, a main controller 44, a distribution panel 45, and an energy storage device 46. In some embodiments, the power supply system 40 may be connected to an external power grid 47.

For example, the photovoltaic generation device 41, the combiner 42, the load 43, and the energy storage device 46 illustrated in FIG. 3 may correspond to the photovoltaic generation device 31, the combiner 32, the load 33, or the energy storage device 35 illustrated in FIG. 2, respectively. In some embodiments, the main controller 44 illustrated in FIG. 3 may correspond to the main controller described above with reference to FIG. 1.

The combiner 42 may electrically connect at least one photovoltaic generation device 41 to the main controller 44. For example, the combiner 42 may combine power output from at least one photovoltaic generation device 41 into one output and supply the one output to the main controller 44.

The main controller 44 may electrically connect the combiner 42, the distribution panel 45, and the power grid 47 to each other. In some embodiments, the main controller 44 may connect the above-described components to auxiliary power sources such as the energy storage device 46 and/or an auxiliary power generation device (e.g., a diesel generator, etc.). For example, the main controller 44 may output power supplied from the combiner 42 to the distribution panel 45, the energy storage device 46, and/or the power grid 47. In some embodiments, the main controller 44 may output power supplied from the power grid 47 to the distribution panel 45 or the energy storage device 46. In some embodiments, the main controller 44 may output power supplied from the energy storage device 46 to the distribution panel 45.

The distribution panel 45 may electrically connect the main controller 44 to at least one load 43. Accordingly, the power supply system 40 may supply power generated from the photovoltaic generation device 41 to the load 43 through the distribution panel 45.

The power supply system 40 may integrate a plurality of energy storage devices 46 and/or auxiliary power generation devices into the power supply system 40 by including the main controller 44, thereby stably supplying power. In some embodiments, the power supply system 40 may stably supply power to the load 43, such as a backup load, even in an off-grid environment in which power is not stably supplied from the power grid 47.

For example, the main controller 44 may perform control on the voltage, current, and/or power output from each component or supplied to each component, according to the status of the photovoltaic generation device 41, the load 43, the energy storage device 46, and/or the power grid 47, and may set the operating mode of the main controller 44, the photovoltaic generation device 41, and/or the energy storage device 46 to a diagnosis mode or an operation mode, etc.

In an embodiment, the power supply system 40 may further include a sub-panel (not shown) that is connected to the main controller 44 and distinct from the distribution panel 45. At this time, at least one backup load having a relatively high need for stable power supply among the loads 43 may be connected to the sub-panel, and at least one non-backup load having a relatively low need for stable power supply among the loads 43 may be connected to the distribution panel 45.

The main controller 44 may electrically connect the combiner 42, the distribution panel 45, the energy storage device 46, the power grid 47, and the sub-panel to each other. The main controller 44 may supply power supplied from the combiner 42, the energy storage device 46, and/or the power grid 47 to at least one non-backup load through the distribution panel 45 and to a backup load through the sub-panel.

For example, in an embodiment, the power supply system 40 may further include a sub-panel that is connected to the main controller 44 and distinct from the distribution panel 45, and the power grid 47 may be connected to the distribution panel 45 instead of being connected to the main controller 44. That is, the main controller 44 may electrically connect the combiner 42, the distribution panel 45, the energy storage device 46, and the sub-panel to each other, and the distribution panel 45 may electrically connect the main controller 44, the non-backup load, and the power grid 47 to each other.

For example, the power supply system 40 may be implemented by connecting the main controller 44, which connects the combiner 42 to the energy storage device 46, to the distribution panel 45 that is pre-installed to connect at least one load 43 to the power grid 47.

Accordingly, the power supply system 40 may stably supply power to the load 43, such as a backup load, even in an off-grid environment in which power is not stably supplied from the power grid 47.

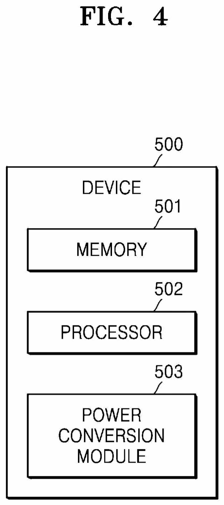

FIG. 4 is a block diagram of a power conversion apparatus 500 according to an embodiment.

Referring to FIG. 4, the power conversion apparatus 500 (hereinafter, referred to as a "device 500") may include a memory 501, a processor 502, and a power conversion module 503.

For example, the device 500 of FIG. 4 may be included in the device 12 or the energy storage device 17 of FIG. 1. Furthermore, the device 500 may be included in the energy storage device 35 of FIG. 2 or the energy storage device 46 of FIG. 3.

The memory 501 is hardware that stores various types of data processed within the device 500, and may store a program for processing and controlling the processor 502 and the power conversion module 503.

The memory 501 may include random access memory (RAM), such as dynamic random access memory (DRAM), and static random access memory (SRAM), read-only memory (ROM), electrically erasable programmable read-only memory (EEPROM), compact disc (CD)-ROM, Blu-ray or other optical disk storage, hard disk drive (HDD), solid-state drive (SSD), or flash memory.

The processor 502 may control the overall operation of the device 500. For example, the processor 502 may control the memory 501 and the power conversion module 503 in general by executing programs stored in the memory 501.

The processor 502 may control the operations of the device 500 and the power conversion module 503 included in the device 500 by executing programs stored in the memory 501. The processor 502 may control at least some of the operations of the device 500 and the power conversion module 503 included in the device 500.

The processor 502 according to an embodiment may apply a first carrier signal and a reference signal to a first full-bridge inverter, and may apply a second carrier signal and the reference signal to a second full-bridge inverter.

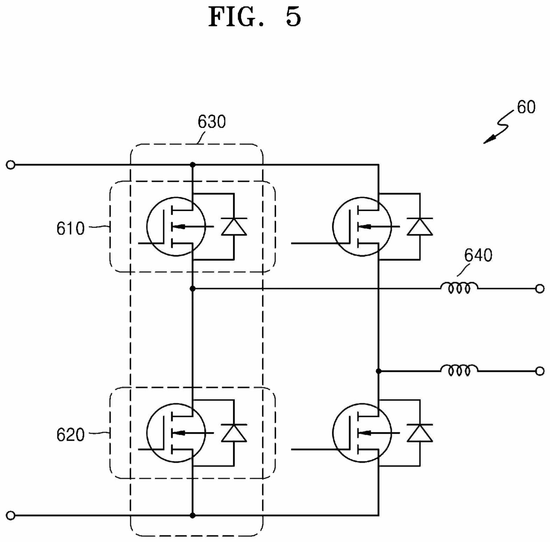

The first full-bridge inverter may be a circuit implemented as a full-bridge inverter including a plurality of switches. Here, a switch may include a switching element. For example, each switch may further include a diode and a capacitor, which are connected in parallel to the switching element. The full-bridge inverter may have a full-bridge configuration, and circuit elements included in the full-bridge configuration and the connection relationship between respective elements will be described later with reference to FIG. 5.

A switching element may refer to an element that operates by repeatedly switching on and off states to convert power. The switching element may be, for example, a metal-oxide-semiconductor field-effect transistor (MOSFET), an insulated gate bipolar transistor (IGBT), or a bipolar junction transistor (BJT).

The first carrier signal is a signal applied in the form of a voltage and may be applied to the plurality of switches included in the first full-bridge inverter. The first carrier signal may be a voltage waveform having a constant cycle, for example, in the form of a triangle wave, a square wave, or a sine wave. The first carrier signal may be applied simultaneously with the reference signal being applied to the plurality of switches.

The second full-bridge inverter may have a circuit structure implemented as a full-bridge inverter including a plurality of switches and may be structurally identical to the first full-bridge inverter.

The second carrier signal is a signal applied in the form of a voltage, similar to the first carrier signal, and may be applied to the plurality of switches included in the second full-bridge inverter. The second carrier signal may be a voltage waveform having a constant cycle, for example, a triangular wave, a square wave, or a sine wave. The second carrier signal may be applied simultaneously with the reference signal being applied to the plurality of switches.

The reference signal is a signal applied in the form of a voltage and may be applied to the plurality of switches included in the first full-bridge inverter and the plurality of switches included in the second full-bridge inverter. The reference signal may be a voltage waveform having a constant cycle, for example, a sine wave, a triangular wave, or a square wave. The reference signal may operate as a gate signal for each of the plurality of switches.

The processor 502 according to an embodiment may control a first switch and a second switch, based on the voltage difference between a first capacitor and a second capacitor.

The first capacitor and the second capacitor may each be a capacitor element. The voltage of the first capacitor and the voltage of the second capacitor may refer to voltages applied across both ends of each capacitor element.

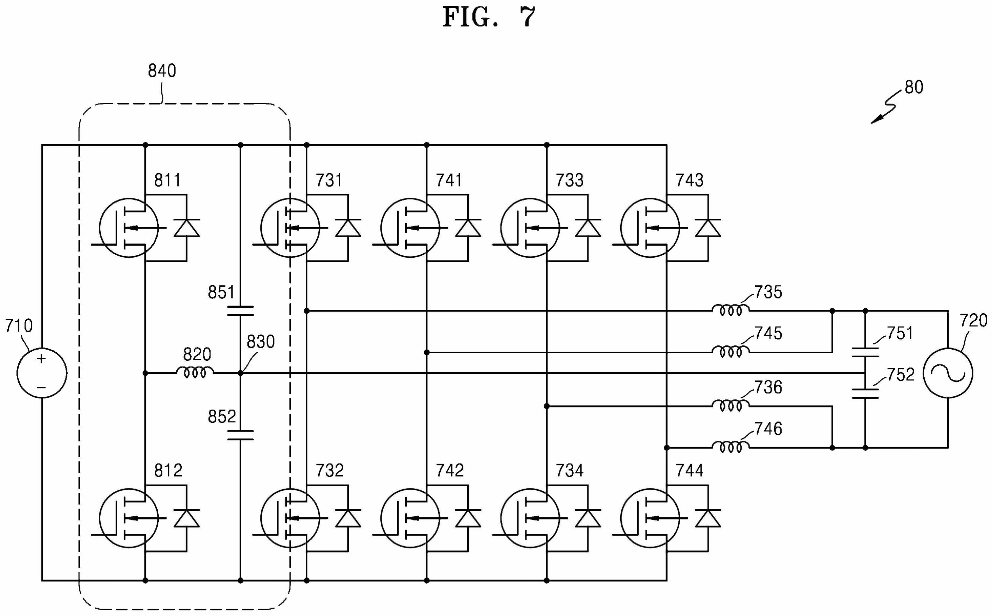

The first switch and the second switch may each include a switching element, and may be the same element as the switch included in the full-bridge inverter described above. A third inductor may be an inductor element. The connection relationships of the first capacitor, the second capacitor, the first switch, the second switch, and the third inductor, and a circuit structure including the same are described below with reference to FIG. 7.

At this time, the first capacitor, the second capacitor, the first switch, the second switch, and the third inductor may all be elements included in a buck-boost converter. The buck-boost converter may refer to a buck-boost split phase circuit structure capable of performing a buck-boost method. Here, the buck-boost method may be a technique for DC-DC power conversion that increases (boost mode) or decreases (buck mode) an input voltage.

The processor 502 according to an embodiment may generate a pulse width modulation (PWM) signal that controls the on/off of the first switch and the second switch. The PWM signal may be a DC voltage signal in the form of a pulse and may operate with a certain duty ratio.

At this time, the processor 502 may generate different PWM signals by adjusting the width of the pulse. The processor 502 may adjust the width of the pulse by adjusting the duty ratio of the pulse. At this time, a duty ratio may mean a ratio of time that a signal is on at a certain frequency.

A PWM signal having a constant frequency may have a repetitive on/off state, thereby controlling the on/off of the first switch and the second switch. At this time, the PWM signals respectively applied to the first switch and the second switch may be different from each other.

A detailed description of various operations of the device 500 that may be performed by the processor 502 will be described below with reference to FIGS. 5 to 10.

The processor 502 may be implemented by using at least one of application-specific integrated circuits (ASICs), DSPs, digital signal processing devices (DSPDs), programmable logic devices (PLDs), FPGAs, controllers, micro-controllers, microprocessors, and other electrical units for performing functions.

The power conversion module 503 is a component that performs conversion between DC power (voltage) and alternating current (AC) power (voltage), and may perform conversion for an input voltage, etc. For example, the power conversion module 503 may convert DC link power received from a power plant, etc. into AC power. The power supply system 10 described above with reference to FIG. 1 may transmit an output voltage generated as a result of the operation of the power conversion module 503 to the external power grid 16.

The power conversion module 503 may include a circuit board that provides a support base for internal configurations provided within the power conversion module, and various circuit elements disposed on the circuit board. The circuit board may provide a support base for internal configurations including components and various circuit elements provided within a power conversion module.

The circuit elements disposed on the circuit board may include either passive components, such as resistors, inductors, and capacitors, or active components, such as transistors and diodes.

For example, the power conversion module 503 may include an input circuit, an output circuit, the first full-bridge inverter, and the second full-bridge inverter. The input circuit may be a circuit that obtains an input voltage. The output circuit may be a circuit that obtains an output voltage. Here, the input voltage may be a voltage input as DC, and the output voltage may be an AC output voltage output as AC.

Examples of the input circuit, the output circuit, the first full-bridge inverter, and the second full-bridge inverter included in the power conversion module 503 are specifically described with reference to FIGS. 5 to 7.

FIG. 5 is an example of a circuit diagram of a first full-bridge inverter configuring a power conversion apparatus according to an embodiment.

According to an embodiment, the first full-bridge inverter may include two legs connected in parallel to an input circuit. For example, the two legs may include a first leg 630 and a second leg. At this time, the first leg 630 and the second leg may be formed in the same structure. Accordingly, the first leg 630 is mainly described below.

The first leg 630 may include two switches 610 and 620. That is, the first full-bridge inverter may be a circuit 60 implemented as a full-bridge inverter including four switches.

The device 500 may control, based on a first carrier signal applied to one of the legs, the on/off of the two switches 610 and 620 included in the corresponding leg 630. The device 500 may control the on/off of the two switches 610 and 620 based on the difference between the first carrier signal and a reference signal, which are applied to one of the legs.

The first full-bridge inverter may be connected to a first inductor 640. The first inductor 640 may be connected to at least one of the two legs included in the first full-bridge inverter. That is, two first inductors 640 may be respectively connected to the first leg 630 and the second leg of the first full-bridge inverter.

The first inductor 640 may be connected between the two switches 610 and 620 included in the first leg 630. The first inductor 640 may be connected to the center of an upper switch 610 and a lower switch 620, which are included in the first leg 630. At this time, the upper switch 610 may be connected to a (+) positive terminal of DC power supply of the input circuit. The lower switch 620 may be connected to a (-) negative terminal of DC power supply of the input circuit or to ground.

According to an embodiment, the second full-bridge inverter may have the same structure as the first full-bridge inverter. That is, the second full-bridge inverter may include two legs 630 connected in parallel to the input circuit. That is, the second full-bridge inverter may be a circuit 60 implemented as a full-bridge inverter including four switches.

The second full-bridge inverter may be connected to a second inductor. The second inductor may be connected to at least one of the two legs included in the second full-bridge inverter. That is, the second full-bridge inverter may be connected to two second inductors respectively connected to the two legs.

The first inductor 640 and the second inductor may each be connected to the output circuit that generates an output voltage. The first inductor 640 and the second inductor may perform LC filter functions for outputs of respective legs. The first inductor 640 and the second inductor may perform smoothing of output currents of respective legs and suppress noise generated during a rapid switching process. Accordingly, the device 500 may stably generate an AC output voltage.

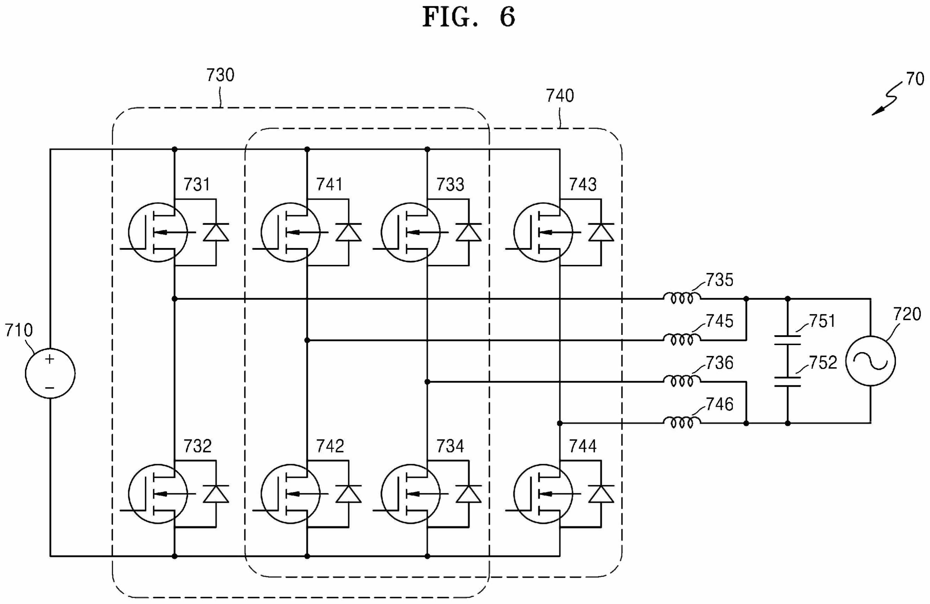

In other words, the first full-bridge inverter and the second full-bridge inverter may include the same circuit structure as a single phase bipolar inverter. A method by which the plurality of switches included in each of the first full-bridge inverter and the second full-bridge inverter operate is described below in FIG. 6.

FIG. 6 is an example circuit diagram of an interleaved bipolar inverter configuring a power conversion apparatus according to an embodiment.

The device 500 according to an embodiment may include an input circuit 710 generating an input voltage, a first full-bridge inverter 730 and a second full-bridge inverter 740, which are connected to the input circuit 710, at least one first inductor 735 and 736 connected to the first full-bridge inverter 730, at least one second inductor 745 and 746 connected to the second full-bridge inverter 740, and an output circuit 720 connected to the at least one first inductor 735 and 736 and the at least one second inductor 745 and 746 to generate an AC output voltage.

At this time, the device 500 may include a capacitor 751 connected to the at least one first inductor 735 and 736 and a capacitor 752 connected to the at least one second inductor 745 and 746. The capacitors 751 and 752 may perform charging/discharging to alleviate voltage changes that occur during a switching operation.

For example, the capacitor 751 may perform charging to store charge in case that a voltage transmitted through the at least one first inductor 735 and 736 increases rapidly. In case that a voltage transmitted through the at least one first inductor 735 and 736 decreases rapidly, the capacitor 751 may perform discharge to release the stored charge. This may be performed similarly for the capacitor 752 and the at least one second inductor 745 and 746. Accordingly, an output voltage ripple may be eliminated and an output voltage may be stabilized.

The device 500 according to an embodiment may include at least one processor that applies a first carrier signal and a reference signal to the first full-bridge inverter 730 and applies a second carrier signal and the reference signal to the second full-bridge inverter 740. Based on the first carrier signal and the reference signal, a plurality of switches 731, 732, 733, and 734 included in the first full-bridge inverter 730 may operate. Based on the second carrier signal and the reference signal, a plurality of switches 741, 742 743, and 744 included in the second full-bridge inverter 740 may operate.

According to an embodiment, the first full-bridge inverter 730 and the second full-bridge inverter 740 may be connected in parallel to the input circuit 710. As the reference signal, the first carrier signal, and the second carrier signal are applied, the first full-bridge inverter 730 and the second full-bridge inverter 740, which are connected in parallel, may operate in an interleaved manner.

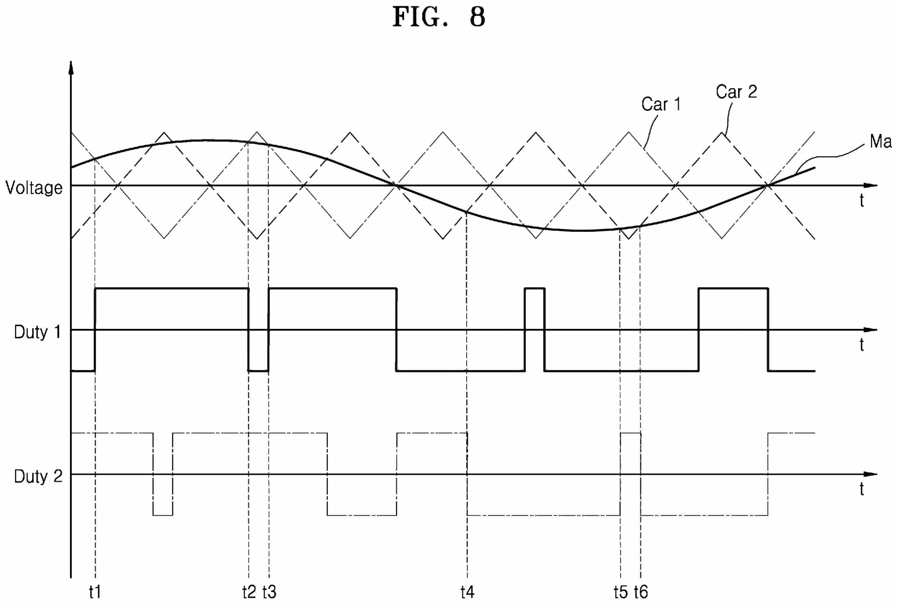

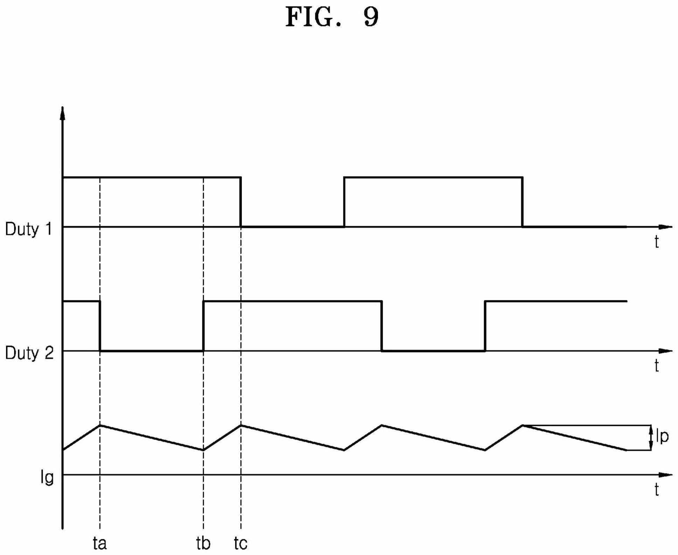

That is, one bipolar inverter including the first full-bridge inverter 730 and the at least one first inductor 735 and 736 may operate, and the remaining one bipolar inverter including the second full-bridge inverter 740 and the at least one second inductor 745 and 746 may operate. At this time, two bipolar inverters may operate in an interleaved manner. A specific process of applying the reference signal, the first carrier signal, and the second carrier signal and a method of performing an interleaved operation accordingly will be described below with reference to FIGS. 8 and 9.

FIG. 7 is an example circuit diagram of an interleaved bipolar inverter applying a buck-boost technique according to an embodiment.

According to an embodiment, the device 500 may include a first switch 811 and a second switch 812, which are connected to the input circuit 710, and a third inductor 820 connected to the first switch 811 and the second switch 812. In some embodiments, the device 500 may further include a first capacitor 851 connected to the first switch 811 and the third inductor 820, and a second capacitor 852 connected to the second switch 812 and the third inductor 820.

Here, the first switch 811 may be connected to the positive electrode part of the input voltage source 710. For example, the first switch 811 may be connected to the positive electrode (+) of a DC link. The second switch 812 may be connected to a negative electrode part of the input voltage source included in the input circuit 710. For example, the second switch 812 may be connected to the negative electrode (-) of the DC link.

The first switch 811, the second switch 812, the third inductor 820, the first capacitor 851, and the second capacitor 852 may be components configuring a buck-boost split phase circuit. Components configuring the buck-boost split phase circuit may form a buck-boost converter 840. The buck-boost converter 840 may mean a functional structure that is connected to a DC link to output a certain DC voltage. The buck-boost converter 840 may mean a functional structure configured to control a certain DC voltage to be output based on the voltage difference between the first capacitor 851 and the second capacitor 852. At this time, the output certain DC voltage may be a voltage split from a DC link voltage.

According to an embodiment, the first switch 811, the second switch 812, and the third inductor 820 may be connected to a neutral point 830 node. The neutral point 830 may mean a reference point that may split a voltage between the positive and negative electrodes of the DC link and provide a symmetrical voltage.

The neutral point 830 may mean a point corresponding to the center of a three-phase system. The neutral point 830 may be the center of a Y-connection circuit to which the first capacitor 851, the second capacitor 852, and the third inductor 820 are connected, as shown in FIG. 7.

According to an embodiment, at least one processor 502 may perform voltage control relative to the neutral point 830 node. The processor 502 may perform control based on the voltage difference between the first capacitor 851 and the second capacitor 852.

In some embodiments, the processor 502 may generate a PWM signal that controls the on/off of the first switch 811 and the second switch 812, which are connected to the third inductor 820. At this time, the at least one processor 502 may control the first switch 811 and the second switch 812 based on the voltage difference between the first capacitor 851 and the second capacitor 852. That is, the PWM signal generated by the processor 502 may be a voltage signal that causes the difference in voltage across each of the first capacitor 851 and the second capacitor 852 to become 0.

The at least one processor 502 may use a certain control algorithm to calculate a signal required for control and generate a PWM signal. The certain control algorithm may be an algorithm that generates a signal required for compensation based on a measured voltage difference value. The certain control algorithm may be, for example, a proportional-integral (PI) control algorithm or a support vector machine (SVM) algorithm, but is not limited thereto.

The generated PWM signal may include both a first PWM signal applied to the first switch 811 and a second PWM signal applied to the second switch 812. In case that the first PWM signal is applied to the first switch 811, the on/off of the first switch 811 may be controlled. At the same time, in case that the second PWM signal is applied to the second switch 812, the on/off of the second switch 812 may be controlled.

At this time, each generated PWM signal may have a certain duty ratio. In case that the duty ratio of the first PWM signal increases, the voltage of an output end connected to the first capacitor 851 may increase. A certain duty ratio may be determined by considering the capacitance of the first capacitor 851 and the second capacitor 852.

For example, in case that the capacitance of the first capacitor 851 is equal to the capacitance of the second capacitor 852, the processor 502 may generate PWM signals by setting the duty ratio of each PWM signal to a value close to 50%. As another example, in case that the capacitance of the first capacitor 851 is different from the capacitance of the second capacitor 852, the ratios of respective voltages applied to the first capacitor 851 and the second capacitor 852 may be proportional to respective capacitances.

The processor 502 may generate a first PWM signal and a second PWM signal to control current flowing in the third inductor 820. The processor 502 may control the current flowing in the third inductor 820 by adjusting the duty ratios of the first PWM signal and the second PWM signal and applying the signals to respective switches.

For example, in case that a voltage across the first capacitor 851 is higher than a voltage across the second capacitor 852, the processor 502 may perform a control operation to increase a voltage of a node positioned between the first capacitor 851 and the second capacitor 852.

To this end, the processor 502 may adjust the duty cycle of the first PWM signal applied to the first switch 811 to increase the duty ratio of the first switch 811. The processor 502 may relatively reduce the duty ratio of the second switch 812 by adjusting the duty cycle of the second PWM signal.

In case that the duty ratio of the first switch 811 increases, the time for which the first switch 811 is maintained in an ON state may increase. In case that the time for which the first switch 811 is maintained in the ON state increases, the voltage of the neutral point 830 node may approach the positive electrode of the DC link. In this case, the current flowing in a direction of the first capacitor 851 and the second capacitor 852 from the third inductor 820 may increase.

That is, charge is replenished toward the direction of the first capacitor 851 and the second capacitor 852 from the third inductor 820, and accordingly, the voltage of the node positioned between the first capacitor 851 and the second capacitor 852 may increase. Accordingly, the processor 502 may control the difference in voltage across each of the first capacitor 851 and the second capacitor 852 to approach 0.

That is, the processor 502 may maintain the voltage evenly by controlling the difference in voltage across each of the first capacitor 851 and the second capacitor 852 to be maintained at 0. As a result, an input voltage may be split into two symmetrical voltages. In other words, a symmetrical voltage of a split phase may be generated.

For example, the neutral point 830 voltage may be maintained at a value corresponding to the middle of the voltage between the positive and negative electrodes of each DC link. The symmetrical voltage of the split phase may be applied to an input end of an inverter. That is, the symmetrical voltage may be applied to an input end of each of a first full-bridge inverter and a second full-bridge inverter, which are connected in parallel.

According to another embodiment, the processor 502 may further perform current control so that the sum of currents based on the neutral point 830 becomes 0. The processor 502 may measure the sum of currents at the neutral point 830 node in case a difference in voltage across each of the first capacitor 851 and the second capacitor 852 occurs.

In some embodiments, the processor 502 may measure current flowing through each of the at least one first inductor 735 and 736, the at least one second inductor 745 and 746, and the third inductor 820. In case that the sum of currents is not 0, the processor 502 may control the first switch 811 and the second switch 812 to make the sum of the currents to become 0.

The processor 502 may generate a first PWM signal and a second PWM signal, which generate a compensation current, so that the sum of the currents becomes 0. The generated first PWM signal and second PWM signal may be applied to the first switch 811 and the second switch 812, respectively. Accordingly, the processor 502 may simultaneously perform voltage control and current control to generate a stable symmetrical voltage.

In this way, the device 500 may divide a single-phase voltage based on the neutral point 830. In some embodiments, the device 500 may stably maintain a phase split voltage even when a load environment changes. For example, the device 500 may supply a voltage of DC 240 V into a voltage of AC 120 V. Accordingly, the device 500 may supply two symmetrical AC 120 V voltages from one DC 240 V voltage source.

An operation of controlling the first switch 811, the second switch 812, and the third inductor 820 and an operation of controlling the interleaved bipolar inverter 70 described above with reference to FIG. 6 do not affect each other.

FIG. 8 is an example of a method by which each switch included in a power conversion apparatus according to an embodiment operates.

Referring to FIG. 8, as an example, the processor 502 may apply a control signal in the form of a sine wave and a first carrier signal Car1 and a second carrier signal Car2, which are in the forms of square waves.

According to an embodiment, the processor 502 may apply the first carrier signal Car1 to any one of the legs included in the first full-bridge inverter. For example, the processor 502 may apply the first carrier signal Car1 to a leg including switches 731 and 732. Accordingly, the device 500 may control the on/off of the switches 731, 732, 733, and 734 included in the first full-bridge inverter.

According to an embodiment, the first full-bridge inverter may operate based on the difference between the first carrier signal Car1 and a reference signal Ma. The processor 502 may turn on specific switches included in the first full-bridge inverter depending on whether the difference between the first carrier signal Car1 and the reference signal Ma is a positive value.

For example, between time t1 and time t2, the first carrier signal Car1 may have a value less than the reference signal Ma. At this time, an upper switch 731 may be turned on and a lower switch 732 may be turned off. For example, between time t2 and time t3, the first carrier signal Car1 may have a value greater than the reference signal Ma. At this time, the upper switch 731 may be turned off and the lower switch 732 may be turned on.

At this time, the upper switch 731 and an opposite switch 734 may perform the same on/off operation. For example, the lower switch 732 and an opposite switch 733 may perform the same on/off operation. That is, a certain switch pair 731 and 734 and another switch pair 732 and 733 can operate complementarily with each other.

In case that the first carrier signal Car1 and the reference signal Ma are applied, an on/off waveform Duty 1 of the certain switch pair 731 and 734 may be output. At this time, the on/off waveform Duty 1 may be determined according to a waveform of each of the first carrier signal Car1 and the reference signal Ma. That is, the duty cycle of the on/off waveform Duty 1 may be determined according to a cycle of each of the first carrier signal Car1 and the reference signal Ma. For example, the on/off waveform (not shown) of another switch pair 732 and 733 may have a complementary form to the on/off waveform Duty 1.

According to an embodiment, the processor 502 may apply the second carrier signal Car2 to one of the legs included in the second full-bridge inverter. For example, the processor 502 may apply the second carrier signal Car2 to a leg including switches 741 and 742. Accordingly, the device 500 may control the on/off of the switches 741, 742, 743, and 744 included in the second full-bridge inverter.

In an embodiment, the second full-bridge inverter may operate based on the difference between the second carrier signal Car2 and the reference signal Ma. The processor 502 may turn on specific switches included in the second full-bridge inverter depending on whether the difference between the second carrier signal Car2 and the reference signal Ma is a positive value.

For example, between time t4 and time t5, the second carrier signal Car2 may have a value greater than the reference signal Ma. At this time, an upper switch 741 may be turned off and a lower switch 742 may be turned on. For example, between time t5 and time t6, the second carrier signal Car2 may have a value smaller than the reference signal Ma. At this time, the upper switch 741 may be turned on and the lower switch 742 can be turned off.

At this time, the upper switch 741 and an opposite switch 744 may perform the same on/off operation. Meanwhile, the lower switch 742 and an opposite switch 743 may perform the same on/off operation. That is, a certain switch pair 741 and 744 and another switch pair 742 and 743 may operate complementarily with each other.

As the second carrier signal Car2 and the reference signal Ma are applied, an on/off waveform Duty 2 of the certain switch pair 741 and 744 may be output. At this time, the on/off waveform Duty 2 may be determined according to a waveform of each of the second carrier signal Car2 and the reference signal Ma. That is, the duty cycle of the on/off waveform Duty 2 may be determined according to a cycle of each of the second carrier signal Car2 and the reference signal Ma. For example, the on/off waveform (not shown) of another switch pair 742 and 743 may have a complementary form to the on/off waveform Duty 2.

According to an embodiment, the first carrier signal Car1 may have the same switching cycle as the second carrier signal Car2. A switching cycle may refer to a cycle of a voltage signal for controlling each switch. In some embodiments, the first carrier signal Car1 may have a certain phase difference from the second carrier signal Car2. The certain phase difference may be, for example, half a cycle (180°).

Accordingly, the first full-bridge inverter and the second full-bridge inverter may respectively operate based on the first carrier signal and the second carrier signal, which are waveforms of the same cycle with a certain phase difference. At this time, the first full-bridge inverter to which the first carrier signal is applied and the second full-bridge inverter to which the second carrier signal is applied may operate with a certain time difference. That is, the first full-bridge inverter and the second full-bridge inverter may operate in an interleaved manner.

FIG. 9 is an example of a grid current Ig waveform of a power conversion apparatus according to an embodiment.

Referring to FIG. 9, the cycle of each of the on/off waveform Duty 1 of the certain switch pair 731 and 734 included in the first full-bridge inverter and the on/off waveform Duty 2 of the certain switch pair 741 and 744 included in the second full-bridge inverter may be checked. For example, the cycle of the grid current Ig waveform may be checked.

For example, between time ta and time tc, it may be checked from Duty 1 that the switch pair 731 and 734 remains in the on state. In this case, as the current through the switch pair 731 and 734 increases, an output current I1 may show an increasing pattern. At this time, the cycle of the output current I1 waveform may match the cycle of Duty 1.

It may be checked from Duty 2 that, between time ta and time tb, the switch pair 741 and 744 remains in the off state. In this case, an output current I2 may not exist as the flow through the switch pair 741 and 744 is interrupted. Conversely, between time tb and time tc, it may be checked from Duty 2 that the switch pair 741 and 744 remains in the on state. In this case, the output current I2 increases again. At this time, the cycle of the output current I2 waveform may match the cycle of Duty 2.

Duty 1 may appear based on the first carrier signal Carl, and Duty 2 may appear based on the second carrier signal Car2. The first carrier signal Car1 and the second carrier signal Car2 may be waveforms of the same cycle with a certain phase difference. Accordingly, the cycle of Duty 1 and the cycle of Duty 2 may be the same with a certain phase difference, and thus, the cycle of the output current I1 and the cycle of the output current I2 may also be the same with a certain phase difference.

The grid current Ig may have a waveform in which the output current I1 and the output current I2 are superimposed. There is a constant phase difference between the output current I1 and the output current I2, and thus a ripple current occurring in respective outputs may be offset. The grid current Ig, in which the output current I1 and the output current I2 are superimposed, may have a waveform in which the ripple current is offset.

Here, the cycle of the grid current Ig waveform may correspond to half of the cycles of Duty 1 and Duty 2. Here, Duty 1 may represent an operation of each switch included in the first full-bridge inverter. Duty 2 may represent an operation of each switch included in the second full-bridge inverter. In other words, the frequency of the grid current Ig waveform may be twice an operating frequency of each switch included in the first full-bridge inverter or the second full-bridge inverter.

Accordingly, a peak-to-peak value Ip of the grid current Ig may be reduced compared to when using a single full-bridge inverter. That is, the interleaved bipolar inverter 70 described above with reference to FIGS. 6 and 7 may reduce the total harmonic distortion (THD) of an AC output compared to when a single full-bridge inverter is used.

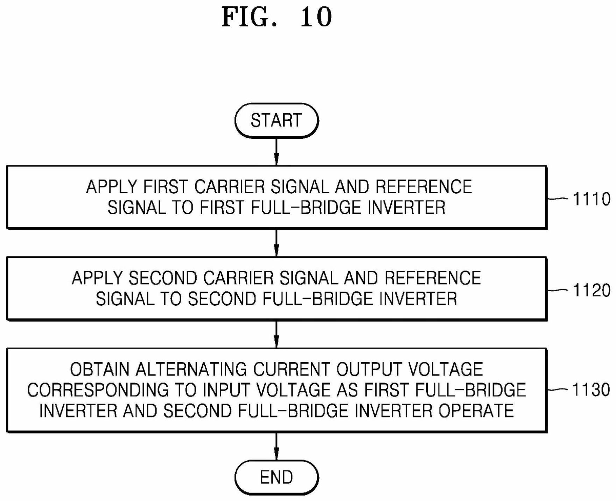

FIG. 10 is a flowchart of a method by which a power conversion apparatus according to an embodiment operates.

The method illustrated in FIG. 10 may be operations performed in the device 500 of FIG. 4. Accordingly, even if omitted below, the above-described contents related to the operation of the device 500 and components of the device 500 of FIG. 4 may also be applied to the method illustrated in FIG. 10.

According to an embodiment, in operation 1110, the processor 502 may apply a first carrier signal and a reference signal to the first full-bridge inverter. In operation 1120, the processor 502 may apply a second carrier signal and the reference signal to the second full-bridge inverter. At this time, the first full-bridge inverter and the second full-bridge inverter may be connected in parallel with the buck-boost converter. For example, the buck-boost converter may be connected to an input circuit.

In operation 1130, as the first full-bridge inverter and the second full-bridge inverter operate, the output circuit 720 included in the power conversion module 503 may obtain an AC output voltage corresponding to an input voltage. The first full-bridge inverter may operate according to the first carrier signal and the reference signal, which are applied by the processor 502. Similarly, the second full-bridge inverter may operate according to the second carrier signal and the reference signal, which are applied by the processor 502.

Here, the first full-bridge inverter may operate based on the difference between the first carrier signal and the reference signal, and the second full-bridge inverter may operate based on the difference between the second carrier signal and the reference signal.

The first carrier signal may have a certain phase difference from the second carrier signal. In some embodiments, the first carrier signal may have the same switching cycle as the second carrier signal.

The processor 502 may control the on/off of two switches included in one of the legs based on the first carrier signal and the reference signal applied to the one leg. Here, each of the legs may include two switches, and the first full-bridge inverter may include two legs connected in parallel to the input circuit.

An AC output voltage may be generated in the output circuit 720 connected to at least one first inductor and at least one second inductor. The at least one first inductor may be connected to the first full-bridge inverter, and the at least one second inductor may be connected to the second full-bridge inverter.

The processor 502 may control the first switch and the second switch based on the voltage difference between the first capacitor and the second capacitor. A plurality of current sensors may be respectively connected to the at least one first inductor, the at least one second inductor, a third inductor, and the third inductor may be connected to the first switch and the second switch, and the first switch and the second switch may be connected to the input circuit.

The processor 502 may generate PWM signals that control on/off of the first switch and the second switch.

A computer-readable recording medium according to an embodiment may record a program for executing a method on a computer.

The embodiments according to the disclosure described above may be implemented in the form of a computer program that may be executed through various components on a computer, and such a computer program may be recorded on a computer-readable medium.

At this time, the medium may include magnetic media, such as hard disks, floppy disks, and magnetic tapes, optical recording media, such as CD-ROMs and digital versatile discs (DVDs), magneto-optical media, such as floptical disks, and hardware devices specifically configured to store and execute program instructions, such as ROM, RAM, and flash memory.

The computer program may be specially designed and configured for the disclosure or may be known and available to those skilled in the art in the computer software field. Examples of computer programs may include not only machine language code, such as that produced by a compiler, but also high-level language code that may be executed by a computer by using an interpreter or the like.

According to the disclosure, a dual bipolar structure operating in an interleaved manner may be applied as the structure of a power conversion apparatus to reduce a load borne by each inverter, thereby reducing loss and heat generation due to THD.

For example, according to the disclosure, there is an advantage in that an output may be controlled more precisely through voltage and current control by additionally utilizing the phase division of a buck-boost technique applicable to the above interleaved bipolar inverter.

The specific implementations described in the disclosure are merely examples and do not limit the scope of the disclosure in any way. For the sake of brevity of the specification, descriptions of conventional electronic components, control systems, software, and other functional aspects of the systems may be omitted. For example, connection lines or connection members between components depicted in the drawings are merely illustrative of functional connections and/or physical or circuit connections, and may be represented as various functional connections, physical connections, or circuit connections that may be replaced or added in an actual device. For example, if there is no specific mention of an element such as "essential," "important," etc., it may not be an essential component for the application of the disclosure.

The use of the terms "above" and similar referent terms in the specification of the disclosure (especially in the claims) may refer to both the singular and the plural. For example, when a range is described in the disclosure, it is considered to include a disclosure that applies individual values belonging to the range (unless otherwise stated), and is the same as describing each individual value constituting the range in the detailed description of the disclosure.

Unless there is an explicit description or contradiction of the order of the operations configuring the method according to the disclosure, the operations may be performed in any suitable order. The disclosure is not necessarily limited to the order in which the above operations are described. The use of any examples or exemplary terms (e.g., "for example," "etc.") in the disclosure is merely intended to illustrate the disclosure in more detail and is not intended to limit the scope of the disclosure by reason of such examples or example terms, unless otherwise limited by the claims. Furthermore, those skilled in the art will appreciate that various modifications, combinations and variations may be made according to design conditions and factors within the scope of the appended claims or their equivalents.

Therefore, the idea of the disclosure should not be limited to the embodiments described above, and not only the scope of the patent claims described below but also all scopes equivalent to or equivalently modified from the scope of the patent claims are included in the scope of the idea of the disclosure.

## Claims

1. A power conversion apparatus comprising:
an input circuit generating an input voltage;
a buck-boost converter connected to the input circuit;
a first full-bridge inverter and a second full-bridge inverter, which are connected to the buck-boost converter;
at least one first inductor connected to the first full-bridge inverter;
at least one second inductor connected to the second full-bridge inverter;
an output circuit connected to the at least one first inductor and the at least one second inductor to generate an alternating current output voltage; and
at least one processor configured to apply a first carrier signal and a reference signal to the first full-bridge inverter and apply a second carrier signal and the reference signal to the second full-bridge inverter,
wherein the first full-bridge inverter operates based on the first carrier signal and the reference signal, and
the second full-bridge inverter operates based on the second carrier signal and the reference signal.

2. The power conversion apparatus of claim 1, wherein the buck-boost converter comprises:
a first switch and a second switch, which are connected to the input circuit;
a third inductor connected to the first switch and the second switch;
a first capacitor connected to the first switch and the third inductor; and
a second capacitor connected to the second switch and the third inductor,
wherein the at least one processor is further configured to control the first switch and the second switch based on a voltage difference between the first capacitor and the second capacitor.

3. The power conversion apparatus of claim 2, wherein the at least one processor is further configured to generate a pulse width modulation (PWM) signal that controls on/off of each of the first switch and the second switch, and
the PWM signal has a certain duty ratio.

4. The power conversion apparatus of claim 1, wherein the first full-bridge inverter comprises two legs connected in parallel to the input circuit,
each of the two legs comprises two switches, and,
based on the first carrier signal applied to one of the two legs, on/off of the two switches included in the one leg is controlled.

5. The power conversion apparatus of claim 1, wherein the first full-bridge inverter and the second full-bridge inverter are connected in parallel to the input circuit.

6. The power conversion apparatus of claim 1, wherein the first carrier signal has a certain phase difference from the second carrier signal.

7. The power conversion apparatus of claim 1, wherein the first carrier signal has a same switching cycle as the second carrier signal.

8. The power conversion apparatus of claim 1, wherein the first full-bridge inverter operates based on a difference between the first carrier signal and the reference signal.

9. The power conversion apparatus of claim 1, wherein the second full-bridge inverter operates based on a difference between the second carrier signal and the reference signal.

10. A method performed by a power conversion apparatus, the method comprising:
applying a first carrier signal and a reference signal to a first full-bridge inverter;
applying a second carrier signal and the reference signal to a second full-bridge inverter; and
obtaining an alternating current output voltage corresponding to an input voltage as the first full-bridge inverter and the second full-bridge inverter operate,
wherein the first full-bridge inverter and the second full-bridge inverter are connected to a buck-boost converter,
the buck-boost converter is connected to an input circuit that generates the input voltage, and
an output circuit generating the alternating current output voltage is connected to at least one first inductor and at least one second inductor.

11. The method of claim 10, further comprising controlling a first switch and a second switch based on a voltage difference between a first capacitor and a second capacitor,
wherein the first capacitor is connected to the first switch and a third inductor,
the second capacitor is connected to the second switch and the third inductor,
the third inductor is connected to the first switch and the second switch, and
the first switch and the second switch are connected to the input circuit.

12. The method of claim 10, further comprising, based on the first carrier signal and the reference signal, which are applied to any one of legs, controlling on/off of two switches included in the one leg,
wherein each of the legs comprises the two switches, and
the first full-bridge inverter comprises two legs connected in parallel to the input circuit.

13. The method of claim 10, wherein the first carrier signal has a certain phase difference from the second carrier signal.

14. The method of claim 10, wherein the first carrier signal has a same switching cycle as the second carrier signal.

15. A computer-readable recording medium having recorded thereon a program to cause a computer to execute the method of claim 10.
